# EUROPÄISCHE PATENTSCHRIFT

(11) **EP 2 579 432 B1**
(45) Veröffentlichungstag und Bekanntmachung des Hinweises auf die Patenterteilung: **16.07.2014**
(21) Anmeldenummer: 11184362.9
(22) Anmeldetag: 07.10.2011
(51) Int. Cl.: H02K 11/02

(54) **Entstörspule**
Choke coil
Bobine d'induction

(43) Veröffentlichungstag der Anmeldung: 10.04.2013
(73) Patentinhaber: Grundfos Holding A/S, 8850 Bjerringbro (DK)
(72) Erfinder: Holmgaard, Thomas, 8850 Bjerringbro (DK)
(74) Vertreter: Patentanwälte Vollmann & Hemmer

(56) Entgegenhaltungen:
- US-A1- 2010 327 678
- US-B1- 6 307 344

## Beschreibung

Die Erfindung betrifft eine Entstörspule gemäß dem Oberbegriff des Anspruchs 1, sowie ein Pumpenaggregat mit einer solchen Entstörspule.

Die geometrischen Abmessungen eines ferromagnetischen Körpers ändern sich unter Einfluss eines Magnetfelds. Für diesen - Magnetostriktion genannten - Effekt ist die Kompression der Struktur eines ferromagnetischen Stoffes verantwortlich.

Diese Materialien können als Gesamtheit von kleinen Materieportionen angesehen werden, die wie Dauermagneten wirken. Wenn das Material nicht magnetisiert ist, sind diese kleinen Portionen zufällig im Raum verteilt. Wird das Material hingegen magnetisiert, richten alle Portionen ihre Achse in dieselbe Richtung aus.

Unter Einfluss mechanischer Kräfte kann es zu Änderungen der magnetischen Eigenschaften eines Objekts kommen, dies wird als Villari-Effekt bezeichnet. Dieser Effekt kann auch an einer Magnetspule beobachtet werden, wenn diese einer mechanischen Belastung ausgesetzt wird. Da sich deren magnetischen Eigenschaften ändern, kann die Funktion eines elektrischen Bauteils oder Apparates, das diese Spule umfasst, völlig aufgehoben oder wenigstens beeinträchtigt werden. Dies gilt insbesondere im Fall einer Entstörspule, die in der Netzzuleitung eines Motors geschaltet einen geringen Blindwiderstand für die Netzfrequenz, aber einen großen Blindwiderstand für hochfrequente Störungen aufweist, durch den das Eindringen solcher Störungen in das Netz behindert wird.

US 2010/0327678 A1 offenbart einen elektrischen Antriebsmotor mit einer Entstörspule. Die Entstörspule weist einen ringförmigen Kern auf, um welchen herum eine Wicklung aufgebracht ist. Die Entstörspule ist mit weiteren elektronischen Komponenten im Inneren eines von einer Abdeckkappe gebildeten Elektronikgehäuses angeordnet.

US 6,307,344 B1 offenbart eine Anordnung zur elektromagnetischen Entstörung von Elektromotoren, wobei im Inneren eines Gehäuses eine ringförmige Spulenanordnung und ein Kondensator angeordnet sind.

Auch bei diesem Stand der Technik besteht das Problem, dass äußere mechanische Kräfte die magnetischen Eigenschaften des Kerns der ring-förmigen Spulen beeinträchtigen können.

Es ist die Aufgabe der vorliegenden Erfindung, die vorstehenden Probleme zu lösen und eine Entstörspule bereitzustellen, bei der ein Villari-Effekt zuverlässig ausgeschlossen werden kann, d.h. deren elektromagnetische Eigenschaften auch unter äußerer mechanischer Belastung unverändert bleiben. Diese Entstörspule soll zudem einfach aufgebaut, leicht herstellbar und kostengünstig sein.

Diese Aufgabe wird gemäß der Erfindung durch eine Entstörspule mit den in Anspruch 1 angegebenen Merkmalen gelöst. Vorteilhafte Weiterbildungen der Erfindung ergeben sich aus den Unteransprüchen, der nachfolgenden Beschreibung und den Zeichnungen.

Die erfindungsgemäße Entstörspule weist einen ringförmigen Spulenkern aus einem magnetischen Material und eine um diesen gewickelte Wicklung auf, wobei der Spulenkern im Inneren eines ringförmigen, eigenstabilen Gehäuses angeordnet ist. Diese gleichsam einfache wie äußerst wirkungsvolle Ummantelung des Kerns schützt diesen gegen äußere Belastungen, die von dem Gehäuse aufgenommen werden. Ein entsprechender Luftspalt zwischen Gehäuse und Kern kann dabei noch eine zusätzliche Sicherheit bieten. In jedem Fall aber kann die erfindungsgemäße Entstörspule frei in einem Bauteil oder Apparat platziert werden, und zwar unabhängig von den jeweiligen mechanischen Lasten, die am Verbauort zu erwarten sind. Der gleichsam einfache wie auch überraschend wirkungsvolle Aufbau der erfindungsgemäßen Entstörspule lässt deshalb zugleich deren besonders flexible Verwendung zu.

Bei der erfindungsgemäßen Entstörspule ist vorgesehen, dass die zumindest eine Wicklung der Spule außen um das Gehäuse gewickelt ist. Damit ist nicht nur ein besonders wirkungsvoller Schutz ihres Kerns, sondern zudem auch noch eine von außen gewährleistete Kühlung der Wicklung möglich.

Das Gehäuse ist bevorzugt aus einem elektrisch isolierenden Material, vorzugsweise aus Kunststoff gefertigt. So kann auf eine üblicherweise erforderliche Isolierung der Wicklung gegen den Kern verzichtet werden. Zugleich ist ein solches Gehäuse besonders einfach z.B. im Spritzgussverfahren herstellbar.

Eine besonders einfache Ummantelung des Kerns der Spule entsteht, wenn das Gehäuse geschlossen ausgebildet ist, wozu der Kern z. B. in einem Herstellungsschritt umspritzt wird. Darüber hinaus hat das geschlossene Gehäuse den Vorteil, dass keine Fremdstoffe in das Innere des Gehäuses eintreten können.

Die erfindungsgemäße Gestaltung des Gehäuses sieht zudem vor, dass dieses aus zwei miteinander verbundenen Schalenkörpern zusammengesetzt ist, die so gestaltet und bemessen sind, dass sie einen Hohlraum umschließen, in dem der ringförmige Spulenkern angeordnet ist. Diese Gestaltung lässt neben einfachen Zusammensetzungen des Gehäuses insbesondere zu, den Hohlraum so zu bemessen, dass ein Luftspalt zwischen Kern und Gehäuse verbleibt, um eventuelle Verformungen des Gehäuses unter mechanischer Last aufzunehmen. Eine schnelle und einfache Verbindung beider Schalenkörper miteinander erfolgt dabei über eine Steckverbindung, insbesondere eine Rastverbindung.

Wenn zumindest einer der Schalenkörper eine zylindrische Seitenwandung, welche den Spulenkern an seinem Innenumfang oder seinem Außenumfang umgibt, sowie an einem Axialende der Seitenwandung einen sich quer zu der Seitenwandung erstreckenden Boden aufweist, ergibt sich ein besonders einfacher und stabiler Aufbau des Gehäuses. Alternativ oder zusätzlich kann zumindest einer der Schalenkörper aber auch aus ringförmig mit zwei zylindrischen radial voneinander beabstandeten Seitenwandungen und einem die beiden Seitenwandungen an einem Axialende verbindenden ringförmigen Boden ausgebildet sein, wobei zwischen den Seitenwandungen der Hohlraum ausgebildet ist, in welchem der Spulenkern angeordnet ist. Die Stabilität des Gehäuses kann noch dadurch gesteigert werden, wenn jeder der beiden Schalenkörper zumindest eine zylindrische Seitenwandung aufweist und die beiden Seitenwandungen einander an einer Seite des Spulenkerns überlappen. Dabei kann eine besonders einfache und zuverlässige Montage beider Schalenkörper dadurch unterstützt werden, wenn diese komplementär zueinander ausgebildete Vorsprünge und Eingriffe zum Führen und/oder Ausrichten beider Elemente in eine vorbestimmte Stecklage aufweisen.

Ein weiterer Vorteil entsteht, wenn bereits an zumindest einer Außenfläche des Gehäuses ein sich in axialer Richtung erstreckender und radial von der Außenfläche vorstehender Abstandhalter ausgebildet ist, welcher zwei Wicklungen oder zwei Abschnitte einer Wicklung voneinander trennt. Durch diese Integration des Abstandhalters am Gehäuse erübrigt sich eine Isolierung, wie sie üblicherweise zusätzlich vorgesehen werden müsste. In einem weiteren Integrationsschritt kann dabei vorgesehen sein, dass die Vorsprünge und Eingriffe Teil des Abstandshalters sind. Dadurch erfährt dieser nicht nur die Funktion einer Isolierung, sondern nimmt zugleich auch die Funktion der Steckverbindung wahr. Insgesamt entsteht ein Gehäuse, was hochfunktionell und zugleich einfach aufgebaut und leicht herstellbar ist.

Bevorzugt ist es zudem, wenn eine Außenfläche des Gehäuses wenigstens ein Klemmelement zum Befestigen eines Drahtes der Wicklung aufweist. Damit wird das Aufbringen der Wicklung ganz erheblich erleichtert, was eine besonders schnelle und einfache Herstellung der Spule ermöglicht. In dem Klemmelement kann der Wicklungsdraht an dem Gehäuse fixiert werden. Sowohl ein robuster Schutz gegen mechanische Einflüsse wie auch eine besonders gute Kühlung kann dadurch erzielt werden, wenn das Gehäuse bevorzugt in eine Vergussmasse eingebettet ist.

Die Erfindung betrifft darüber hinaus ein Pumpenaggregat mit einem elektrischen Antriebsmotor, in dem zumindest eine Entstörspule gemäß der vorangehenden Beschreibung angeordnet ist. Insbesondere kann es sich bei diesem Pumpenaggregat um ein Tauchpumpenaggregat handeln. Bei den Pumpenaggregaten ist es bekannt, das Statorgehäuse und/oder ein Elektronikgehäuse, in welchem elektronische Bauteile zur Steuerung des Motors angeordnet sind, mit einer Vergussmasse auszugießen, um ein Eindringen von Feuchtigkeit in diesen Bereich zu verhindern. Bei dem Ausgießen dieses Bereiches besteht das Problem, dass der Spulenkern einer Entstörspule unerwünschten Druckkräften ausgesetzt wird. Dies wird durch das erfindungsgemäß vorgesehene Gehäuse gemäß der vorangehenden Beschreibung verhindert. Das Gehäuse ist insbesondere derart dicht ausgebildet, dass ein Eindringen von Vergussmasse in das Innere des Gehäuses verhindert wird, sodass ein Spulenkern im Inneren des Gehäuses frei von Kräften gehalten wird, welche durch den Druck der Vergussmasse hervorgerufen werden.

Die vorliegende Erfindung wird im Folgenden anhand eines Ausführungsbeispiels unter Bezugnahme auf die beiliegenden Figuren näher erläutert. Gleiche oder gleichwirkende Teile sind mit gleichen Bezugsziffern versehen. Aus Gründen der Übersichtlichkeit wurden nicht alle dieser gleichen oder gleichwirkenden Teile entsprechend beziffert. Es zeigen:
- Figur 1: eine perspektivische Ansicht von schräg oben auf eine Tauchpumpe mit einer erfindungsgemäßen Entstörspule;
- Figur 2: eine Explosionsansicht des Gehäuses und des Spulenkerns der Entstörspule der Figur 1;
- Figur 3: eine perspektivische Ansicht von schräg oben auf das zusammengesteckte Gehäuse der Figur 2, und
- Figur 4: eine perspektivische Ansicht von schräg oben auf das Gehäuse der Figur 3 mit einer daran befestigten Wicklung.

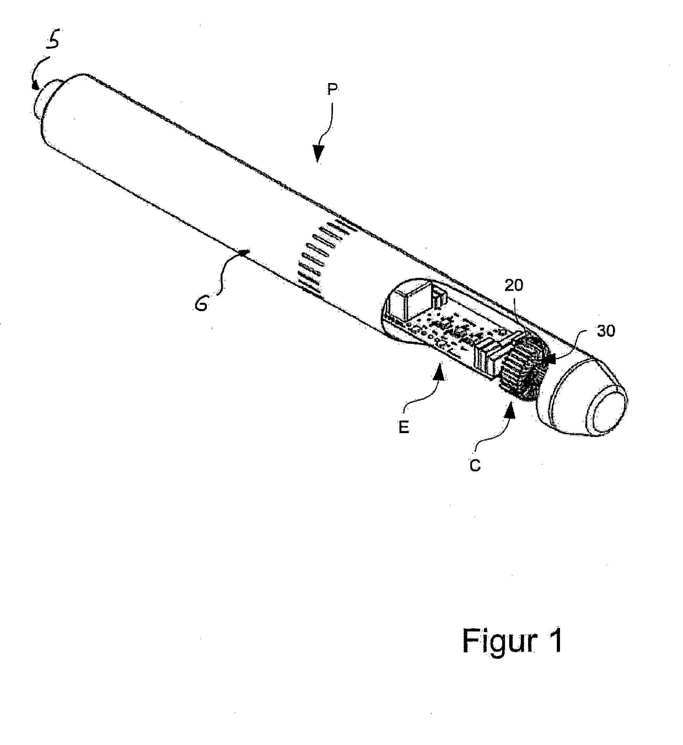

Figur 1 zeigt eine perspektivische Ansicht von schräg oben auf eine Tauchpumpe P mit einer erfindungsgemäßen Entstörspule C. Diese ist am unteren Ende der Pumpe P hinter einer Elektronik E in einer Netzzuleitung zu einem Antriebsmotor im Inneren des Pumpengehäuses G angeordnet. Es ist jedoch zu verstehen, dass die Entstörspule C auch an einer anderen Position im Inneren des Pumpengehäuses G angeordnet sein könnte. Im Inneren des Pumpengehäuses G ist neben dem Antriebsmotor eine Pumpenstufe angeordnet, welche von dem Antriebsmotor angetrieben wird und die Flüssigkeit über die seitlichen Schlitze der Pumpe P ansaugt und am oberen Ende 5 der Pumpe P ausstößt. Die Entstörspule C besteht dabei aus einem ringförmigen Spulenkern 10 (nicht sichtbar), der mit Wicklungen 20 versehen ist, die wiederum um ein Gehäuse 30 verlaufen, in dem der Spulenkern 10 aufgenommen ist.

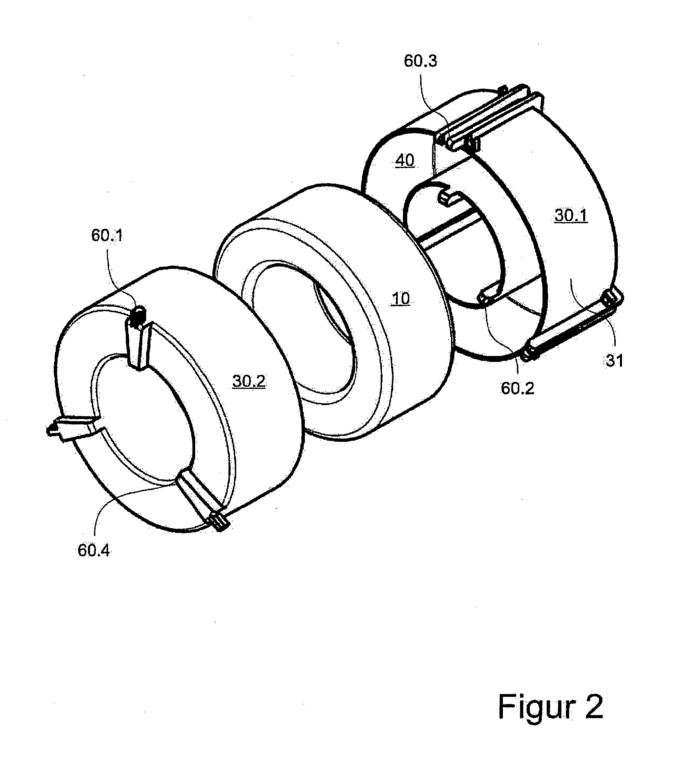

Die Figur 2 zeigt eine Explosionsansicht des Gehäuses 30 und des Spulenkerns 10 der Entstörspule C der Figur 1. Der Kern 10 besteht aus einem magnetischen Material, z. B. Ferrit. Zwei Schalenkörper 30.1 und 30.2 aus Kunststoff sind so gestaltet und bemessen, dass sie in einem zusammengesteckten Zustand einen ringförmigen Hohlraum 40 bilden, in dem der Kern 10 aufgenommen wird. Zwischen dem Kern 10 und den Innenoberflächen der Schalenkörper 30.1 und 30.2 kann dabei ein Luftspalt verbleiben, der eventuelle Verformungen der Schalenkörper 30.1 und 3.2 aufnimmt. Der Kern 10 ist damit auf einfache Art und Weise gegen äußere mechanische Belastungen geschützt, wodurch eine ungewünschte Änderung seiner magnetischen Eigenschaften, also das Auftreten des Villari-Effekts ausgeschlossen ist. Die Schalenkörper 30.1 und 30.2 sind aus einem elektrisch nichtleitenden Material hergestellt und weisen eine Dicke auf, welche die erforderliche elektrische Isolierung zwischen den Wicklungen 20 und dem Kern 10 herstellt sowie die gewünschten eigenstabilen Eigenschaften sicherstellt.

Zum einfachen Verbinden der Schalenkörper 30.1 und 30.2 sind an diesen Vorsprünge 60.1 und 60.2 ausgeformt, die in komplementäre Ausnehmungen bzw. Eingriffe 60.3 und 60.4 gesteckt werden können. Dadurch wird eine Sicherung der Schalenkörper 301. und 30.2 gegen Verformung unter mechanischer Last in einer definierten Stecklage erreicht. Im zusammengesteckten Zustand bilden dabei die einander überlappenden Umfangsflächen der Schalenkörper 30.1 und 30.2 eine gemeinsame, besonders starke Außenwand des Gehäuses 30, welche hohen mechanischen Belastungen standhält und einen Villari-Effekt sicher ausschließt.

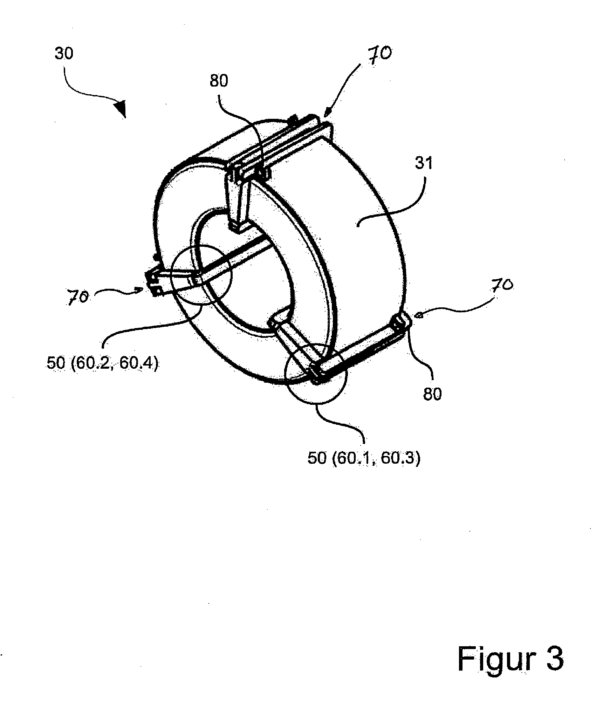

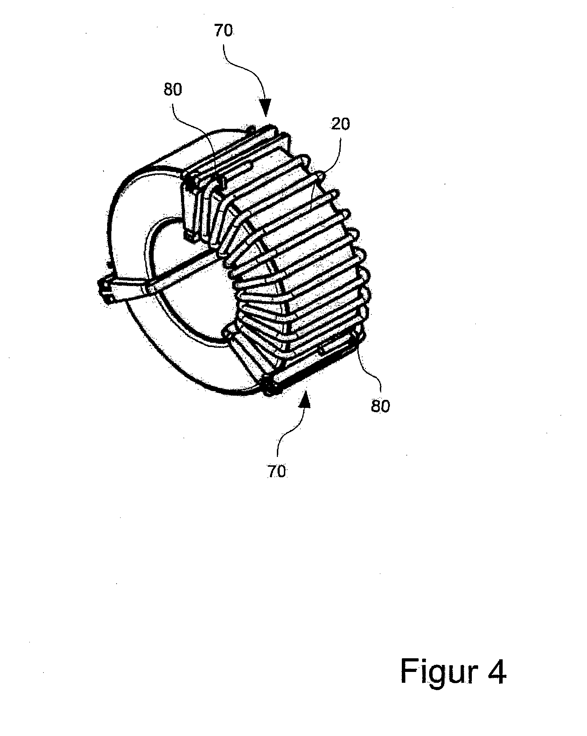

Die Figuren 3 und 4 zeigen perspektivische Ansichten von schräg oben auf das zusammengesteckte Gehäuse 30 der Figur 2, in welchem der Spulenkern 10 aufgenommen ist. An einer Außenfläche 31 des Gehäuses 30 sind drei Abstandshalter 70 ausgebildet, die den erforderlichen Abstand und die erforderliche Kriechlänge zwischen einzelnen Wicklungen 20 sichern, um eine elektrische Isolierung zwischen diesen herzustellen. Aus dieser Figur ist weiterhin ersichtlich, dass die Vorsprünge 60.1 und 60.3 und die Eingriffe 60.2 und 60.4 integriert mit den Abstandshaltern ausgeführt sind, wodurch diese eine platzsparende und zugleich leicht herzustellende Doppelfunktion erlangen. Die Vorsprünge 60.1 und 60.3 bilden mit den Eingriffen 60.2 und 60.4 entsprechende Steckverbindungen, welche die Schalenkörper 30.1 und 30.2 gegen Verformen unter mechanischer Last sichern. Diese Verbindungen 50 können dabei auch als Rastverbindung ausgestaltet sein, die eine Öffnung des derart gebildeten Gehäuses 30 in axialer Richtung unter mechanischer Last sicher ausschließt.

Die Figur 4 zeigt eine perspektivische Ansicht von schräg oben auf das Gehäuse 30 der Figur 3 mit einer daran befestigten Wicklung 20 von insgesamt drei Phasen, wobei nur eine Wicklung dargestellt ist. Zum Befestigen der Wicklung 20 sind an der Außenfläche 31 des Gehäuses 30 Klemmelemente 80 ausgebildet, welche dem Fixieren der Drähte dienen. Dadurch ist die Wicklung 20 besonders leicht und schnell an dem Gehäuse 30 anzubringen.

In der Summe entsteht eine Entstörspule C, die hohen Drücken standhält, ohne ihre gewünschten Eigenschaften zu verlieren. Dies ist insbesondere deshalb wichtig, da der Innenraum des Pumpengehäuses G, in welchen die Elektronik E und die Entstörspule 10 angeordnet sind, mit einer Vergussmasse ausgegossen wird. Diese Vergussmasse bewirkt einen gewissen Druck im Inneren des Gehäuses G, welcher durch das Gehäuse 30 der Entstörspule 10 von dem Spulenkern 10 ferngehalten wird. Obwohl die vorliegende Erfindung in Bezug auf eine Tauchpumpe näher erläutert wurde, ist sie keinesfalls allein darauf beschränkt, sondern kann prinzipiell überall dort verwendet werden, wo es auf eine Spule ankommt, deren Eigenschaften auch unter hohen mechanischen Belastungen unverändert bleiben sollen, und die gleichzeitig einfach und kostengünstig herstellbar sein soll. Die erfindungsgemäßen Vorteile sind auch daran zu beobachten. Die in jedem einzelnen Fall erforderlichen Anpassungen der Spule, insbesondere die spezifische Ausgestaltung des Gehäuses, stehen im Wissen und Können des Fachmanns.

### Bezugszeichenliste

- 10: Spulenkern
- 20: Wicklung
- 30: Gehäuse
- 30.1: Erster Schalenkörper
- 30.2: Zweiter Schalenkörper
- 31: Außenfläche
- 40: Hohlraum
- 50: Steckverbindung
- 60.1, 60.2: Vorsprünge
- 60.3, 60.4: Eingriffe
- 70: Abstandhalter
- 80: Klemmelement
- C: Entstörspule (Coil)
- E: Elektronik (Electronic)
- P: Pumpe (Pump)

## Patentansprüche

1. Entstörspule (C) mit einem ringförmigen Spulenkern (10) aus einem magnetischen Material und zumindest einer um den Spulenkern (10) gewickelten Wicklung (20), wobei der Spulenkern (10) im Inneren eines ringförmigen, eigenstabilen Gehäuses (30) angeordnet ist, **dadurch gekennzeichnet, dass** das Gehäuse (30) aus zwei miteinander verbundenen Schalenkörpern (30.1, 30.2) über eine Steckverbindung (50) zusammengesetzt ist, die so gestaltet und bemessen sind, dass sie einen Hohlraum (40) umschließen, in dem der ringförmige Spulenkern (10) angeordnet ist, und dass die zumindest eine Wicklung (20) außen um das Gehäuse (30) gewickelt ist.

2. Entstörspule (C) nach Anspruch 1, **dadurch gekennzeichnet, dass** das Gehäuse (30) aus einem elektrisch isolierenden Material, vorzugsweise aus Kunststoff gefertigt ist.

3. Entstörspule (C) nach einem der vorangehenden Ansprüche, **dadurch gekennzeichnet, dass** das Gehäuse (30) geschlossen ausgebildet ist.

4. Entstörspule (C) nach einem der vorangehenden Ansprüche, **dadurch gekennzeichnet, dass** die Schalenkörper (30.1, 30.2) über eine Rastverbindung miteinander verbunden sind.

5. Entstörspule (C) nach einem der vorangehenden Ansprüche, **dadurch gekennzeichnet, dass** zumindest einer der Schalenkörper (30.1) eine zylindrische Seitenwandung, welche den Spulenkern (10) an seinem Innenumfang oder seinem Außenumfang umgibt, sowie an einem Axialende der Seitenwandung einen sich quer zu der Seitenwandung erstreckenden Boden aufweist.

6. Entstörspule (C) nach Anspruch 5, **dadurch gekennzeichnet, dass** zumindest einer der Schalenkörper (30.2) ringförmig mit zwei zylindrischen radial voneinander beabstandeten Seitenwandungen und einem die beiden Seitenwandungen an einem Axialende verbindenden ringförmigen Boden ausgebildet ist, wobei zwischen den Seitenwandungen der Hohlraum (40) ausgebildet ist, in welchem der Spulenkern (10) angeordnet ist.

7. Entstörspule (C) nach Anspruch 5 oder 6, **dadurch gekennzeichnet, dass** jeder der beiden Schalenkörper (30.1, 30.2) eine zylindrische Seitenwandung aufweist und die beiden Seitenwandungen einander an einer Seite des Spulenkerns (10) überlappen.

8. Entstörspule (C) nach einem der vorangehenden Ansprüche, **dadurch gekennzeichnet, dass** die Schalenkörper (30.1, 30.2) komplementär zueinander ausgebildete Vorsprünge (60.1, 60.2) und Eingriffe (60.3, 60.4) zum Führen und/oder Ausrichten beider Elemente (30.1, 30.2) in eine vorbestimmte Stecklage aufweisen.

9. Entstörspule (C) nach einem der vorangehenden Ansprüche, **dadurch gekennzeichnet, dass** an zumindest einer Außenfläche (31) des Gehäuses (30) ein sich in axialer Richtung erstreckender und radial von der Außenfläche (31) vorstehender Abstandhalter (70) ausgebildet ist, welcher zwei Wicklungen (20) oder zwei Abschnitte einer Wicklung (20) voneinander trennt.

10. Entstörspule (C) nach Anspruch 8 und Anspruch 9, **dadurch gekennzeichnet, dass** die Vorsprünge (60.1, 60.2) und Eingriffe (60.3, 60.4) Teil des Abstandshalters (70) sind.

11. Entstörspule (C) nach einem der vorstehenden Ansprüche, bei welchem eine Außenfläche (31) des Gehäuses (30) wenigstens ein Klemmelement (80) zum Befestigen eines Drahtes der Wicklung (20) aufweist.

12. Entstörspule (C) nach einem der vorangehenden Ansprüche, **dadurch gekennzeichnet, dass** das Gehäuse (30) in eine Vergussmasse eingebettet ist.

13. Pumpenaggregat (P) mit einem elektrischen Antriebsmotor, **dadurch gekennzeichnet, dass** der elektrische Antriebsmotor zumindest eine Entstörspule (C) gemäß einem der vorangehenden Ansprüche aufweist.

## Claims

1. A suppression coil (C) with an annular coil core (10) of a magnetic material and at least one winding (20) which is wound around the coil core (10), wherein the coil core (10) is arranged in the inside of an annular, inherently stable housing (30), **characterised in that** the housing (30) is composed of two shell bodies (30.1, 30.2) which are connected to one another via a plug-in connection (50) and which are shaped and dimensioned such that they enclose a cavity (40) in which the annular coil core (10) is arranged, and that the at least one winding (20) is wound at the outside around the housing (30).

2. A suppression coil (C) according to claim 1, **characterised in that** the housing (30) is manufactured of an electrically insulating material, preferably of plastic.

3. A suppression coil (C) according to one of the preceding claims, **characterised in that** the housing (30) is designed in a closed manner.

4. A suppression coil (C) according to one of the preceding claims, **characterised in that** the shell bodies (30.1, 30.2) are connected to one another via a detent connection.

5. A suppression coil (C) according to one of the preceding claims, **characterised in that** at least one of the shell bodies (30.1) has a cylindrical side wall which surrounds the coil core (10) on its inner periphery or its outer periphery, as well as a base extending transversely to the side wall, on an axial end of the side wall.

6. A suppression coil (C) according to claim 5, **characterised in that** at least one of the shell bodies (30.2) is designed in an annular manner with two cylindrical side walls radially distanced to one another and with an annular base connecting the two side walls at an axial end, wherein the cavity (40) in which the coil core (10) is arranged, is formed between the side walls.

7. A suppression coil (C) according to claim 5 or 6, **characterised in that** each of the two shell bodies (30.1, 30.2) has a cylindrical side wall and the two side walls overlap one another on one side of the coil core (10)

8. A suppression coil (C) according to one of the preceding claims, **characterised in that** the shell bodies (30.1, 30.2) comprise projections (60.1, 60.2) and recesses (60.3, 60.4) which are designed complementarily to one another, for guiding and/or aligning both elements (30.1, 30.2) into a predefined plug-in position.

9. A suppression coil (C) according to one of preceding claims, **characterised in that** on at least one outer surface (31) of the housing (30) there is formed a spacer (70) extending in the axial direction, projecting radially from the outer surface (31) and separating two windings (20) or two sections of a winding (20) from one another.

10. A suppression coil (C) according to claim 8 and 9, **characterised in that** the projections (60.1, 60.2) and recesses (60.3, 60.4) are part of the spacer (70).

11. A suppression coil (C) according to one of the preceding claims, with which an outer surface (31) of the housing (30) comprises at least one clamping element (80) for fastening a wire of the winding (20).

12. A suppression coil (C) according to one of the preceding claims, **characterised in that** the housing (30) is embedded into a cast mass.

13. A pump assembly (P) with an electrical drive motor, **characterised in that** the electrical drive motor comprises at least one suppression coil (C) according to one of the preceding claims.

## Revendications

1. Bobine d'induction (C) comprenant un noyau de bobine (10) annulaire en matériau magnétique et au moins un enroulement (20) bobiné autour du noyau de bobine (10), le noyau de bobine (10) étant disposé à l'intérieur d'un boîtier (30) annulaire autostable, **caractérisée en ce que** le boîtier (30) est constitué de deux corps en forme de coque (30.1, 30.2) reliés entre eux par l'intermédiaire d'une connexion enfichable (50), lesquels sont conçus et dimensionnés de façon à entourer un espace creux (40) dans lequel est disposé le noyau de bobine (10) annulaire et **en ce que** ledit enroulement (20), au moins au nombre de un, est bobiné extérieurement autour du boîtier (30).

2. Bobine d'induction (C) selon la revendication 1, **caractérisée en ce que** le boîtier (30) est réalisé dans un matériau électriquement isolant, de préférence en matière plastique.

3. Bobine d'induction (C) selon l'une des revendications précédentes, **caractérisée en ce que** le boîtier (30) est fermé.

4. Bobine d'induction (C) selon l'une des revendications précédentes, **caractérisée en ce que** les corps en forme de coque (30.1, 30.2) sont reliés entre eux par l'intermédiaire d'une liaison par encliquetage.

5. Bobine d'induction (C) selon l'une des revendications précédentes, **caractérisée en ce qu'**au moins l'un des corps en forme de coque (30.1) présente une paroi latérale cylindrique qui entoure le noyau de bobine (10) sur son pourtour intérieur ou son pourtour extérieur, de même qu'il présente, au niveau d'une extrémité axiale de la paroi latérale, un fond s'étendant transversalement à la paroi latérale.

6. Bobine d'induction (C) selon la revendication 5, **caractérisée en ce qu'**au moins l'un des corps en forme de coque (30.2) est de forme annulaire, constitué de deux parois latérales cylindriques radialement espacées l'une de l'autre et d'un fond annulaire reliant les deux parois latérales au niveau d'une extrémité axiale, l'espace creux (40) dans lequel est disposé le noyau de bobine (10) étant formé entre les parois latérales.

7. Bobine d'induction (C) selon la revendication 5 ou 6, **caractérisée en ce que** chacun des deux corps en forme de coque (30.1, 30.2) présente une paroi latérale cylindrique et les deux parois latérales se chevauchent mutuellement sur un côté du noyau de bobine (10).

8. Bobine d'induction (C) selon l'une des revendications précédentes, **caractérisée en ce que** les corps en forme de coque (30.1, 30.2) présentent des saillies (60.1, 60.2) et des prises (60.3, 60.4) conçues de manière complémentaire entre elles pour le guidage et/ou l'alignement des deux éléments (30.1, 30.2) dans une position d'enfichage prédéterminée.

9. Bobine d'induction (C) selon l'une des revendications précédentes, **caractérisée en ce qu'**est formé sur au moins une surface extérieure (31) du boîtier (30) un écarteur (70) s'étendant en direction axiale et faisant saillie radialement de la surface extérieure (31), qui sépare l'un de l'autre deux enroulements (20) ou deux parties d'un enroulement (20).

10. Bobine d'induction (C) selon la revendication 8 et 9, **caractérisée en ce que** les saillies (60.1, 60.2) et les prises (60.3, 60.4) font partie de l'écarteur (70).

11. Bobine d'induction (C) selon l'une des revendications précédentes, dans laquelle une surface extérieure (31) du boîtier (30) présente au moins un élément de serrage (80) pour la fixation d'un fil de l'enroulement (20).

12. Bobine d'induction (C) selon l'une des revendications précédentes, **caractérisée en ce que** le boîtier (30) est noyé dans une masse de scellement.

13. Groupe motopompe (P) comprenant un moteur d'entraînement électrique, **caractérisé en ce que** le moteur d'entraînement électrique comporte au moins une bobine d'induction (C) selon l'une des revendications précédentes.
